(19) **Europäisches Patentamt**

**European Patent Office**

**Office européen des brevets**

(11) **EP 0 971 301 A2**

(12) **EUROPEAN PATENT APPLICATION**

(43) Date of publication:
12.01.2000 Bulletin 2000/02

(51) Int. Cl.$^7$: **G06F 17/60**

(21) Application number: **99111524.7**

(22) Date of filing: **14.06.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **10.07.1998 JP 21194298**

(71) Applicant:
**HONDA GIKEN KOGYO KABUSHIKI KAISHA Minato-ku Tokyo (JP)**

(72) Inventors:
• **Murakami, Hiroshi,**
c/o Honda Gijutsu Kenkyusho
Wako-shi, Saitama (JP)

• **Yano, Shunji,**
c/o Honda Gijutsu Kenkyusho
Wako-shi, Saitama (JP)
• **Uehara, Yuji,**
c/o Honda Engineering Co.,LTD
Sayama-shi, Saitama (JP)
• **Nakamura, Kazuhiro,**
c/o Honda Engineering Co.,LTD
Sayama-shi, Saitama (JP)

(74) Representative:
**Liska, Horst, Dr.-Ing. et al**
**Patentanwälte**
**H. Weickmann,K. Fincke,F.A. Weickmann,**
**B. Huber,H. Liska,J. Prechtel,B. Böhm**
**Postfach 86 08 20**
**81635 München (DE)**

(54) **Vehicle distribution system**

(57) The invention provides a
vehicle distribution system for minimizing variations of waiting times when actual ride demands deviate from statistical data.

Given statistical data representing all trips at all ports, the system determines the number of all vehicles to be deployed within an area of the ports using the formula: deployed vehicle count = port count x number of predicted trips per average travel time between ports ; in order to minimize varying vehicle waiting times.

FIG. 1

## Description

The present invention relates generally to a vehicle distribution system and, more particularly, to a vehicle distribution system for stably supplying (i.e., distributing) vehicles to a plurality of ports within an area in a desired waiting time established by the system in keeping with ride demands at each of the ports.

Where vehicles need to be distributed among a plurality of ports within an area in response to ride demands generated at each of the ports, some ports may lack vehicles to meet their ride demands while others may have excess vehicles. In such a case, a vehicle distribution system may be devised to move (i.e., redistribute) surplus vehicles between ports to replenish shortages of vehicles wherever they occur.

The above kind of vehicle distribution system is designed to deal with vehicle shortages on an a posteriori basis. This means that it takes time to move surplus vehicles from one port to another. If a new ride demand occurs while vehicle redistribution is under way or if some vehicles left ports on their way to other ports before a redistribution process is initiated, a surplus or shortage of vehicles may occur again at any port upon completion of the redistribution. That is, a preferred waiting time cannot be observed stably in the face of varying ride demands.

One solution to the above deficiency may be for vehicles to be redistributed on the basis of predicted ride demand data. Illustratively, a system may be devised to distribute vehicles according to predicted ride demand data based on the number of existing vehicles at each of the ports, on the ride demands currently generated at the port in question, and on past statistical ride demand data regarding the port. One example of that system is a vehicle demand predicting system disclosed in Laid-Open Japanese Patent Application No. Hei 9-153098.

With the disclosed vehicle demand predicting system, a discrepancy between the statistical ride demand data and the actual ride demands can lead to changes in a desired waiting time established by the system. Where the system redistributes vehicles by predicting ride demands based on the statistical data, the system-established waiting time should preferably fall within a range of choice despite deviations of the actual ride demands from the statistical data. This is a question of how much leeway the vehicle distribution system should be accorded, which is a very important factor in determining the usefulness of the system.

It is therefore an object of the present invention to provide a vehicle distribution system which, in distributing vehicles in accordance with statistical ride demand data, minimizes changes in waiting time despite discrepancies between actual ride demands and the past statistical data.

In carrying out the invention and according to one aspect thereof, there is provided a vehicle redistribution system for predicting ride demands based on ride demands generated at a plurality of ports in an area as well as on statistical ride demand data regarding all the ports in order to redistribute vehicles from a port having surplus vehicles to a port lacking vehicles; wherein, after total predicted ride demand data per day are acquired from the statistical ride demand data, the number of all vehicles to be deployed within the area is computed using the following formula: deployed vehicle count = number of all ports in the area x number of predicted ride demands per average travel time between ports ; wherein the number of predicted ride demands per average travel time between ports is converted from the total predicted ride demand data per day.

The system of the above structure allows each of the ports to have as many vehicles distributed as the number of ride demands predicted to occur approximately in an average of travel times required for vehicles to move between ports (called the average travel time). Theoretically, whenever a ride demand occurs at a given port, a vehicle is redistributed to that port from a port that is the destination of the demand. Upon elapse of the average travel time, the arrangement above will bring about the same vehicle, distributed status as that before occurrence of the ride demand.

Thus even if actual ride demands deviate from the past statistical ride demand data, the system ensures some leeway in distributing vehicles. As such, the inventive vehicle distribution system minimizes fluctuations in the desired waiting time established by the system. In other words, it is possible for the vehicle distribution system to set an optimum number of vehicles deployed in the area with a minimum of changes in the waiting time.

As described, this invention provides a vehicle distribution system capable of redistributing vehicles based on predicted ride demand data during a vehicle distribution process. If actual ride demands deviate from the predicted ride demand data, the system offers a high degree of leeway in redistributing vehicles and thereby minimizes fluctuations of vehicle waiting times at each of the ports configured in the area.

Preferred embodiments of this invention will now be described in detail with reference to the accompanying drawings.

Fig. 1 is a schematic diagram showing a typical constitution of a vehicle distribution system embodying the invention;

Fig. 2 is a block diagram showing key functions of a terminal at a port and of a host computer;

Fig. 3 is a schematic diagram illustrating ride demands and vehicle counts in effect at each port before redistribution instructions are issued;

Fig. 4 is a schematic diagram depicting ride demands and vehicle counts in effect at each port after redistribution instructions have been issued;

Fig. 5 is a flowchart of steps for computing a surplus or a shortage of vehicles;

Fig. 6 is a flowchart of steps for determining the redistribution of vehicles based on a computed surplus or shortage of vehicles;

Fig. 7 is a schematic diagram showing typical time periods required to move vehicles among ports;

Fig. 8 is a graphic representation indicating relations between the number of deployed vehicles and the number of redistributed vehicles;

Fig. 9 is a graphic representation depicting relations between the number of deployed vehicles and the average waiting time;

Figs. 10A through 10C are schematic diagrams showing simulated travel times of vehicles moved between ports;

Fig. 11 is a graphic representation depicting actual ride demands on a given day;

Fig. 12 is a graphic representations illustrating deviations of waiting times per deployed vehicle count; and

Fig. 13 is a graphic representation also illustrating deviations of waiting times per deployed vehicle count.

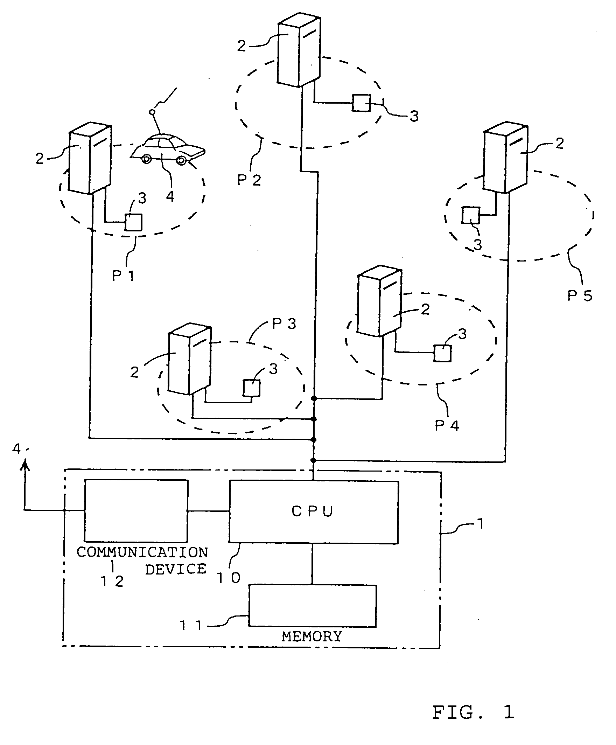

Fig. 1 is a schematic diagram showing a typical constitution of a vehicle distribution system embodying the invention. In this example, five ports are assumed to exist within an area. Ports P1 through P5 (generically called the port P hereunder where appropriate) represent parking spaces at such places as a golf course, an airport and a hotel. A plurality of vehicles 4 are assumed to be deployed within the area. An optimum number of vehicles to be operated in the area will be discussed later. Each port P has a terminal 2. Each terminal 2 is furnished with a sensor 3 that detects the combings and goings of vehicles.

The sensor 3 is capable of identifying a vehicle 4 by detecting its vehicle number. The vehicle number to be detected may be that of a number plate attached to the front and rear of each vehicle, or some suitable number provided on the side or top of each vehicle for detection. The vehicle number is not limited to numerals; it may be constituted by identification information using a bar code, characters, marks and/or other symbols. The sensor 3 may be an optical sensor for optically reading such vehicle numbers from vehicles.

Each terminal 2 has an identification unit (not shown) for identifying vehicle users. The identification unit checks an ID number or other data entered by a vehicle user to see if the user is a registered contractor. The ID number or like data should be written preferably on an IC card. The identification unit reads data from the IC card submitted by a user prior to vehicle use. When the use of the vehicle is terminated, the user again submits his or her IC card to the identification unit which, upon reading the card, verifies the end of vehicle use. The terminal 2 also comprises an input unit (not shown) through which users enter desired destinations. The input unit may be constituted by a set of switches corresponding to the port names.

Each vehicle 4 may illustratively be an electric vehicle that runs by itself. When a user is allowed to use a vehicle, the doors of the vehicle is unlocked and the vehicle is made ready to be started. Instead of having its doors automatically unlocked, the vehicle may be unlocked manually by a user utilizing his or her IC card. In any case, it is preferred that the identification information (ID number, etc.) identifying each potential vehicle user carrying an IC card be recognized by the terminal 2 of the port P before the user rides a vehicle.

The terminals 2 are connected to a host computer 1 (called the host hereunder) through communication lines. Data are exchanged between the terminals 2 and the host 1. The terminal 2 of a port P at which a vehicle user wishes to ride a vehicle transmits to the host 1 the vehicle numbers of the existing vehicles and the existing vehicle count at the port P in question, as well as the ID number of the contractor and the ride demand. A demand occurs when a user enters his or her ID number. Each demand includes destination information. Given such an ID number, the host 1 references stored personal information on contractors to decide whether to allow the use of a vehicle for the user in question. Following the decision in favor of the vehicle use, the host 1 allows the terminal 2 to rent a vehicle and to designate a specific vehicle to be rented. The permission to rent a vehicle and the designation of the vehicle to be rented permit the user actually to ride the vehicle. The rent permission and the vehicle designation give rise to what is called a "starting trip."

The terminal 2 of a port P at which a vehicle user riding a vehicle has arrived transmits to the host 1 the vehicle numbers of currently available vehicles and the existing vehicle count at the port P, the contractor ID number of the user which arrived, recognized arrival information (called an arriving trip), and travel data about the contractor. An arriving trip is output when the sensor 3 detects the arrival at the port P of the vehicle 4 corresponding to the starting trip.

The host 1 has computing means (CPU) 10 and a storage device (memory) 11. The CPU 10 in conjunction with the memory 11 performs computations to supply the terminal 2 with permission to rent vehicles and designation of vehicles to be rented on the basis of information entered through the terminal 2. The host 1 also includes a communication device 12 for giving instructions to each vehicle 4. The memory 11 stores predicted ride demand data (called predicted starting trips hereunder) about each port P as part of statistical ride demand data regarding all ports. Also stored in the memory 11 are contractor information and contractor travel data. Predicted starting trips represent predicted daily demands based on past demand results. Contractor information denotes personal information such as contractor names associated with ID numbers. Contractor travel data are made up of contractors' ride distances and ride times used as accounting information to be used when the contractors are later billed.

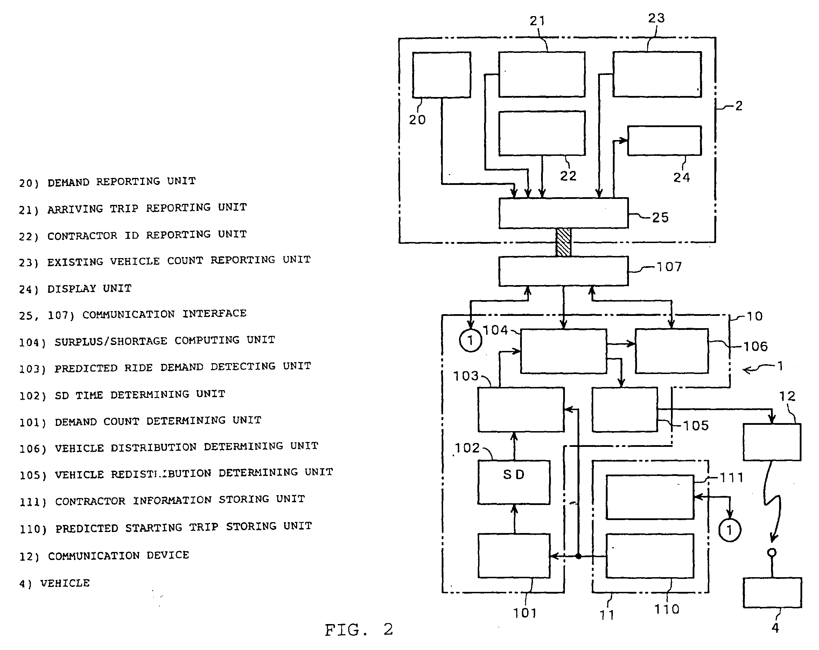

Fig. 2 is a block diagram showing key functions of a terminal 2 and the host 1. The terminal 2 includes a demand reporting unit 20, an arriving trip reporting unit 21, a contractor ID reporting unit 22 and an existing vehicle count reporting unit 23 for reporting respectively demands, arriving trips, contractor IDs and an existing vehicle count to the host. The demand reporting unit 20 reports to the host 1 the occurrence of a demand whenever an ID number entered by a user is recognized. The arriving trip reporting unit 21 notifies the host 1 of arrivals of vehicles detected by the sensor 3. The contractor ID reporting unit 22 informs the host 1 of ID numbers read from IC cards or other medium. The existing vehicle count reporting unit 23 reports the current number of vehicles counted on the basis of the vehicle numbers as well as comings and goings of vehicles detected by the sensor 3.

The terminal 2 also has a display unit 24 that instructs or guides users to ride vehicles. In giving instructions or guidance to users, the display unit 24 relies on permission to rent vehicles or other suitable directives from the host 1. The instructions or guidance may be given as either visual or audio information. The terminal 2 comprises a communication interface 25 for exchanging data with the host 1. If a vehicle is currently available at the port P and if the display unit 24 is capable of issuing an available vehicle instruction immediately after the input of an ID code, the display unit 24 may indicate the applicable vehicle number. If no vehicle is currently available at the port P, the display unit 24 may indicate a predicted waiting time.

The memory 11 of the host 1 has a predicted starting trip storing unit 110 and a contractor information storing unit 111. The predicted starting trip storing unit 110 accumulates daily demand results at each port in the form of time series data, and supplies the CPU 10 with the data denoting predicted starting trips. Presented as predicted starting trips, the past demand results may preferably be stored in accordance with the weather patterns, the time zones of the day, the days of the week, and other suitable criteria. This will allow the CPU 10 to get data on predicted starting trips in a specific time zone on a specific day of the week under a specific weather pattern. The contractor information storing unit 111 stores contractor information including the contractors' travel data. The contractor information is stored beforehand, and the contractors' travel data are entered from the terminals 2.

The CPU 10 is connected via a communication interface 107 to the communication interfaces 25 of the terminals 2. A demand count determining unit 101 of the CPU 10 determines a predicted number of demands occurring per hour on the basis of the predicted starting trips held in the memory 11. Depending on whether the predicted number of demands exceeds a reference count, a search depth (SD) time determining unit 102 determines a search range, i.e., a search depth (SD) time which spans predetermined hours (or minutes) starting from the present time and in which to search for predicted starting trips. An algorithm for determining the SD time will be described later.

A predicted ride demand detecting unit 103 reads from the predicted starting trip storing unit 110 predicted starting trips within the SD time determined by the search depth time determining unit 102, and outputs what is read to a surplus/shortage computing unit 104. The surplus/shortage computing unit 104 computes a surplus or a shortage of vehicles based on the demands and existing vehicle count sent from the terminal 2 at each port P, as well as on the above-mentioned predicted starting trips. The computation of the vehicle surplus or shortage takes into account those arriving trips at destination ports which are predicted by the destination information included in the demands.

On the basis of the surplus or shortage of vehicles 4 at each port P, a vehicle redistribution determining unit 105 outputs instructions for moving excess vehicles 4 from one port P to another, i.e., for redistributing vehicles 4. Vehicle redistribution instructions are reported to the vehicles 4 via the communication device 12. Each vehicle 4 has a communication device and an automatic traveling unit allowing the vehicle to respond to redistribution instructions. The automatic traveling unit may be a position detecting system utilizing map data and GPS (global positioning system), or a known system relying on traffic signals and an obstruction monitoring scheme.

If there is any available vehicle, a vehicle distribution determining unit 106 immediately notifies the applicable terminal 2 of permission to rent and designation of the vehicle to be rented. If a vehicle is lacking, the vehicle distribution determining unit 106 computes a waiting time based on a predicted arriving time of a redistributed vehicle designated by the vehicle redistribution determining unit 105. The terminal 2 is notified of the waiting time which is presented to the vehicle user waiting for a vehicle.

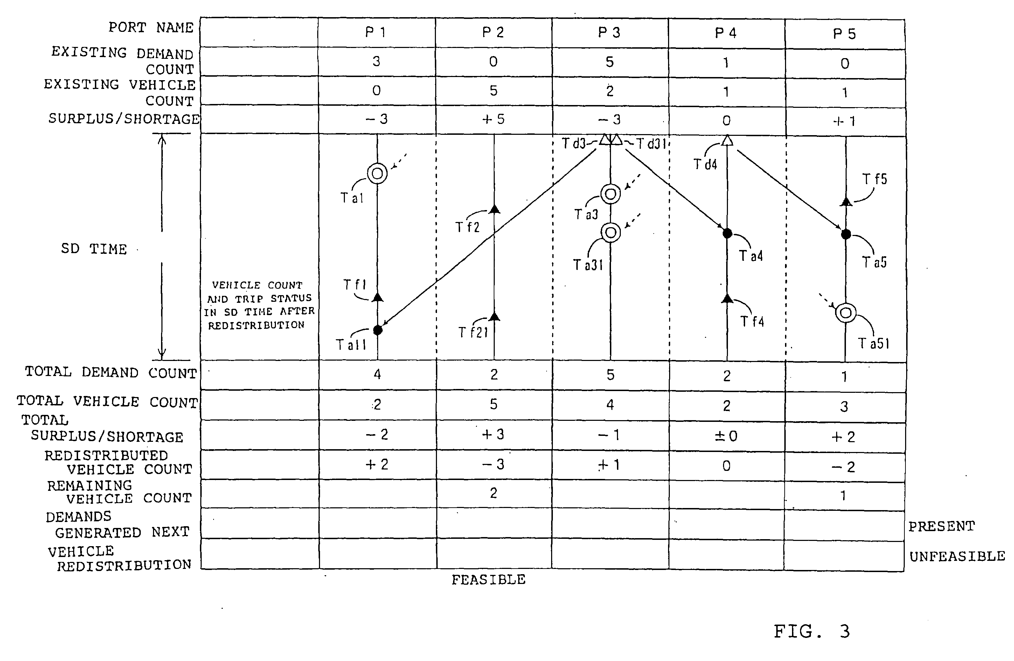

How vehicles are distributed illustratively will now be described. If vehicles were distributed solely on the basis of the existing vehicle count and current demands at each port P, efficient distribution of vehicles would be impossible because of fluctuating demands and constant movements of vehicles resulting in an additional surplus or shortage of vehicles. This bottleneck is circumvented by redistributing vehicles while demands and arriving trips within a predetermined SD time are taken into consideration. Fig. 3 is a schematic diagram showing how the number of vehicles varies at each port P in keeping with the starting and arriving trips at the ports. This diagram takes into account those trips that are predicted to occur in the current SD time but does not consider vehicles to be redistributed.

In Fig. 3, the port P1 has a demand count of 3 and an existing vehicle count of 0. That is, the port P1 lacks three vehicles at present. The port P1 is subject to two arriving trips: an arriving trip Ta1 stemming from a starting trip that occurred earlier at another port, and an arriving trip Ta11 resulting from a starting trip Td3 that occurred at the port P3 at the start of the current CD time. Furthermore, a starting trip Tf1 is predicted to occur. This brings the total demand count to 4. Since two vehicles are available in the current SD time against the demand count of 4, two vehicles are lacking at the port P1.

The port P2 has a demand count of 0 and an existing vehicle count of 5. That is, the port P2 has five surplus vehicles. With starting trips Tf2 and Tf21 predicted to occur at the port P2, the total demand count is brought to 2. Because five vehicles are available in the current SD time against the demand count of 2 at the port P2, three vehicles are in surplus there.

The port P3 has a demand count of 5 and an existing vehicle count of 2. This means that the part P3 currently lacks three vehicles. With two vehicles currently available, the port P3 immediately meets two demands causing starting trips Td3 and Td31 to occur. The port P3 is subject to arriving trips Ta3 and Ta31 stemming from starting trips that occurred at other ports in a previous SD time. With no predicted starting trip, the total demand count remains at 5. Because four vehicles are available in the current SD time against the demand count of 5, the port P3 lacks one vehicle.

The port P4 has a demand count of 1 and an existing vehicle count of 1 and thus has no surplus or shortage of vehicles at present. Because it has one vehicle currently available, the port P4 immediately meets the existing demand, causing a starting trip Td4 to occur. With a starting trip Tf4 predicted to occur at the port P4, its total demand count is brought to 2. Furthermore, an arriving trip Ta4 is expected to occur due to a starting trip originated at the port P3. That is. two vehicles are available in the current SD time against the demand count of 2, so that there is no surplus or shortage of vehicles at the port P4.

The port P5 has a demand count of 0 and an existing vehicle count of 1 and thus has one vehicle currently in surplus. The port P5 is subject to two arriving trips: an arriving trip Ta5 stemming from the starting trip Td4 originated at the port P4, and an arriving trip Ta51 derived from a starting trip originated at another port in a previous SD time. With a starting trip Tf5 predicted to occur at the port, its total demand count amounts to 1. When the demand count is 1 against three vehicles available in the current SD time, the port P5 has two surplus vehicles.

Vehicles are redistributed on the assumption that vehicle and demand counts vary in the SD time. Below is a description of a multistage algorithm for vehicle redistribution. In a first stage of the algorithm, the ports with vehicles that may be redistributed within the SD time and the number of these available vehicles are detected. In the above example, the ports P2 and P5 have surplus vehicles that may be redistributed. In a second stage, the remaining number of vehicles following the redistribution of the surplus vehicles is obtained. In a third stage, a check is made to see if the remaining vehicles are enough to met the demands that may occur next. Illustratively, a demand cannot be met immediately if it occurs at a given port P as a result of an arriving trip after all vehicles have been redistributed and before an available vehicle count at the port in question is replenished. In such a case, vehicle redistribution is deemed feasible if the remaining vehicle count is judged enough to cover the newly generated demand.

In the example above, when the port P2 has three surplus vehicles redistributed to other ports, it is still left with two vehicles in surplus. Even after meeting the predicted starting trip Tf2 occurring next, the port P2 has one vehicle in surplus. Thus the port P2 has three vehicles that may be redistributed, and the redistribution is feasible. Meanwhile, when the port P5 has two surplus vehicles redistributed, it is left with one vehicle. After meeting the demand of the predicted starting trip Tf5 occurring next, the port P5 has no surplus vehicle left so that vehicle redistribution is deemed unfeasible.

Preferably, vehicles should be redistributed to ports P short of vehicles from the nearest ports P. If the port P5 is not subject to any new starting demand, then both the port P2 and the port P5 may have their vehicles redistributed. vehicles are redistributed from whichever port is the closest to any vehicle-lacking port. It is assumed here that the ports P1 and P3 short of vehicles are closer to the port P2 than to the port P5. On that assumption, two vehicles are moved from the port P2 to the port P1 and one vehicle from the port P2 to the port P3.

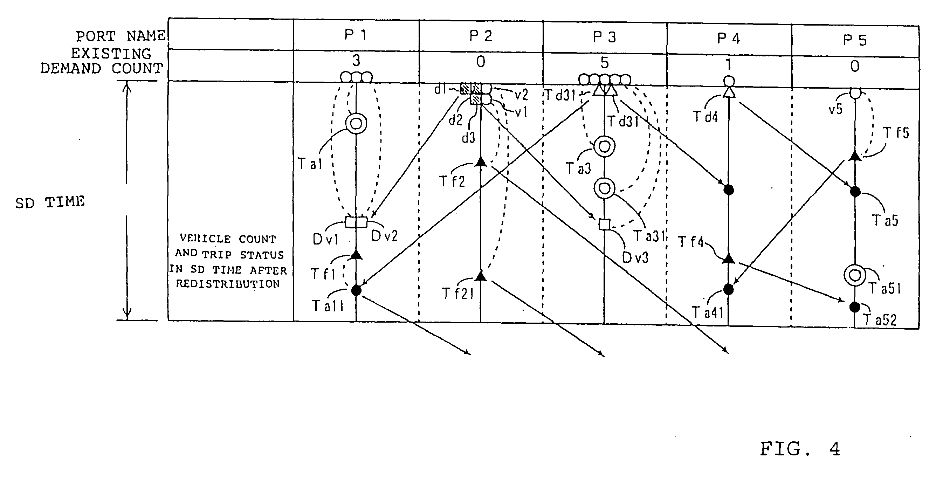

Fig. 4 is a schematic diagram depicting how the number of vehicles varies at each port P in the SD time following vehicle redistribution based on the rearrangements above. In Fig. 4, the first user representing the current demand at the port P1 may ride a vehicle corresponding to the arriving trip Ta1. The second and the third users may ride two vehicles (Dv1, Dv2) redistributed from the port P2. The user representing the predicted starting trip Tf1 may ride a vehicle provided by the arriving trip Ta11.

The port P2 has two vehicles (d1, d2) redistributed to the port P1 and one vehicle (d3) moved to the port P3. The user corresponding to the predicted starting trip Tf2 may ride a currently available vehicle (V1), and the user representing the predicted starting trip Tf21 may ride another currently available vehicle (V2).

The port P3 with its currently available two vehicles can immediately meet two of its five demands. That is, the first and the second users may ride vehicles represented by the starting trips Td3 and Td31. The third and the fourth users may ride vehicles provided by the arriving trips Ta3 and Ta31. The fifth user may ride a vehicle (Dv3) redistributed from the port P2.

The port P4 with its currently available one vehicle can immediately meet one demand. That is, the user may ride a vehicle of the starting trip Td4. Another user corresponding to a predicted starting trip may ride a vehicle of the arriving trip Ta4. The port P4 is shown here receiving an arriving trip Ta41, which stems from the predicted starting trip Tf5 originated at the port T5 and which was not taken into consideration for vehicle redistribution because it was not predictable at the port P4.

The port P5 has one vehicle available but is subject to no demand. This means that a starting trip will not occur immediately. The user corresponding to the predicted starting trip Tf5 may ride the existing vehicle V5. Vehicles of the subsequent arriving trips Ta5 and Ta51 remain undistributed. The port P5 is shown getting an arriving trip Ta52, which stems from the predicted starting trip Tf4 originated at the port P4 and which was not taken into consideration for vehicle redistribution because it was not predictable at the port P5. Alternatively, the arriving trip Ta52 may be taken into account for vehicle redistribution based on statistical data.

As a result of the vehicle redistribution above, the ports P1 through P3 meet all demands in the SD time without surplus or shortage of vehicles. The port P4 has one excess vehicle left and the port P5 has three vehicles left in surplus.

In the above example, all demands have been met in the current SD time. If there are any vehicles for which the demands were not met within the SD time in question, they will be carried over to the vehicle redistribution process in the next SD time. If a maximum waiting time is determined beforehand and if that maximum waiting time is exceeded in the current SD time, demands are met by redistributing available vehicles including the vehicles at the ports P that were determined earlier not to be subject to vehicle redistribution.

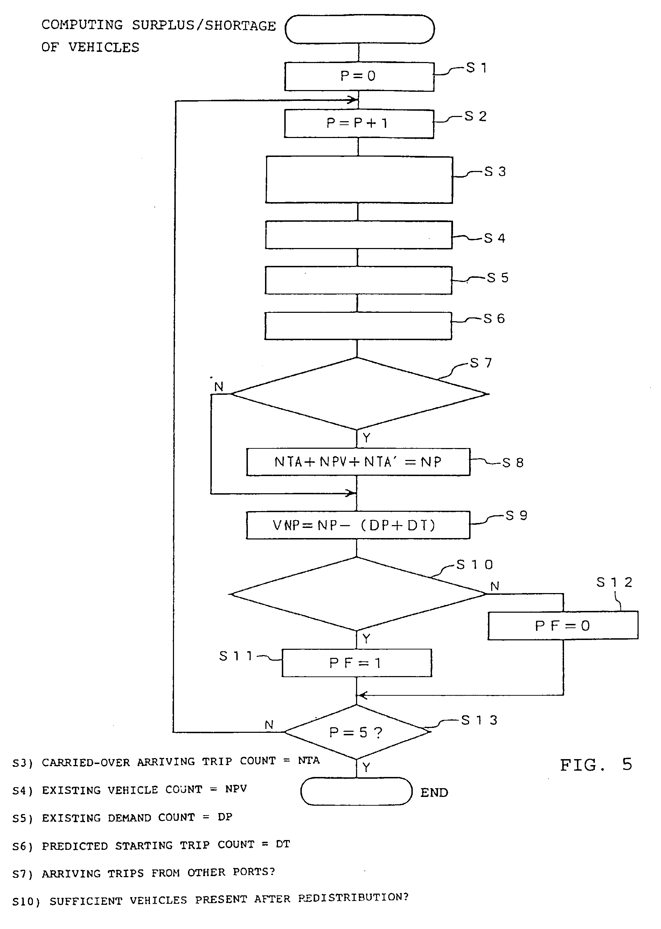

The above processing of vehicle redistribution will now be described with reference to a flowchart. Fig. 5 is a flowchart of steps for computing any surplus or shortage of vehicles being distributed. In step S1 of Fig. 5, a value of 0 is set to a parameter P representing a given port P. In step S2, the parameter P is incremented by 1. The steps that follow concern the port P represented by the parameter P. In step S3, the number of carried-over arriving trips, i.e., the number of arriving trips based on the starting trips that had occurred up to the preceding computation process, is set to a parameter NTA. In step S4, an existing vehicle count is set to the parameter NPV. In step S5, an existing demand count is set to a parameter DP. In step S6, a predicted starting trip count is set to a parameter DT.

In step S7, a check is made to see if any arriving trips occur in the current SD time. The check is based on the computations verifying whether any starting trips occur at any other ports, whether the destination information included in demands that generated these starting trips includes the own port, and whether any of such arriving trips will reach the own port within the current SD time. The computations take into account the known distances between the ports configured and the expected travel speeds of the vehicles involved. If any arriving trips are detected in step S7, step S8 is reached. In step S8, the number of arriving trips (NTA') is added to the arriving trip count NTA as well as the existing vehicle count NPV. The sum denotes an available vehicle count NP.

In step S9, a surplus or shortage of vehicles is computed. Specifically, the existing demand count DP and the predicted starting trip count DT are subtracted from the available vehicle count NP in order to acquire a surplus/shortage of vehicles. In step S10, a check is made to see if the number of available vehicles following vehicle redistribution is sufficient. The decision of step S10 is made on the basis of whether there are any vehicles left after redistribution of the vehicles judged to be in surplus upon computation of the surplus/shortage of vehicles and whether these remaining vehicles are enough to meet demands that may subsequently occur. If the result of the check in step 510 is affirmative, step 511 is reached. In step S11, a flag PF is set to indicate that vehicle redistribution of feasible. If vehicle redistribution is deemed unfeasible, step S12 is reached and the flag PF is cleared. In step S13, a check is made to see if the parameter P has reached 5, i.e., whether the surplus or shortage of vehicles has been computed for all ports configured. If the result of the check in step S13 is negative, step S2 is reached again. The computing process is repeated until the parameter P is found to have reached 5 covering all ports P1 through P5.

Described below is a process of vehicle redistribution based on the number of surplus or lacking vehicles computed above. This redistribution process takes into account the number of vehicles that may be parked at each port, i.e., the capacity of its parking lot. If the number of vehicles that may be parked at each port (called the accommodating capacity hereunder) is small while the total number of deployed vehicles within the area is considerable, congestion can occur when vehicles are coming in and going out. This can result in a prolonged waiting time despite the large number or vehicles deployed.

That is to say, there are certain vehicle counts at which the waiting time is minimal, and increasing the number of vehicles does not necessarily shorten the waiting time. For example, if the number of all deployed vehicles is 75, the waiting time is about 4 minutes for the accommodating capacity (CAP) of 30 vehicles, 2 minutes for the capacity of 40 vehicles, and 1 minute for the capacity of 50, and it would be extremely long for the accommodating capacity (CAP) of 20 vehicles. This requires redistributing vehicles in accordance with the accommodating capacity of each port, as will be described below using a flowchart.

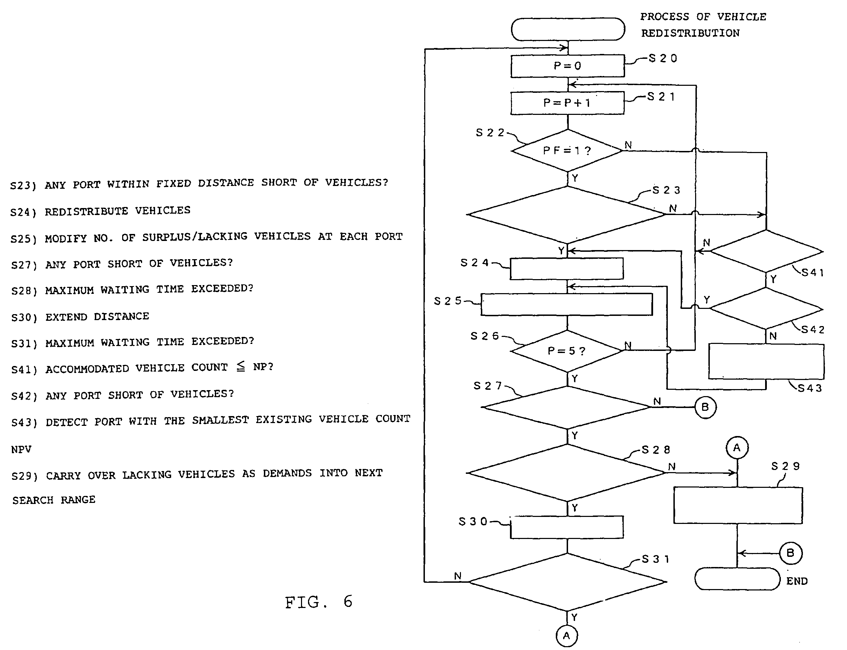

In step S20 of the flowchart in Fig. 6, a value of 0 is set to the parameter P representing a given port P. In step S21, the parameter P is incremented by 1. In step S22, a check is made to see if the flag PF is set indicating the presence of available vehicles at the port P for redistribution. If the flag PF shows vehicle redistribution to be feasible, step S23 is reached. In step S23, a check is made to see if any port within a predetermined distance from the port P lacks vehicles. The check of step S23 is intended to make sure that any available vehicles are redistributed preferentially to the nearest port within the predetermined minimum distance from each port having surplus vehicles.

If the result of the check in step S23 is affirmative, step S24 is reached. In step S24, vehicles are redistributed from the port P in question to other ports short of vehicles. There may be cases, however, in which vehicles are in fact unavailable at the moment despite the vehicles being counted as available within the SD time. Thus only those vehicles that are currently available will be redistributed. The redistribution of vehicles is followed by step S25. In step S25, the number of surplus or lacking vehicles at each port is changed to reflect the altered number of vehicles there following the redistribution.

If the result of the check in either step S22 or step 523 is negative, i.e., if the port in question has no vehicles that may be redistributed or if there is no port short of vehicles within the predetermined distance of the port, then step S41 is reached.

In step S41, a check is made to see if the number of accommodated vehicles CAP is at most the predicted number of vehicles NP available in the SD time. If the result of the check in step S41 is affirmative, i.e., if more vehicles than can be accommodated are expected to arrive at the port within the SD time, then step S42 is reached. In step S42, a check is made to see if there are any other ports short of vehicles. If such a port is detected, step S24 is reached in which vehicles are redistributed to that port.

If there is no port short of vehicles, step S42 is followed by step S43. In step S43, the port currently having the fewest vehicles is detected. If the port with the smallest number of vehicles is determined, step S24 is reached in which vehicles are redistributed to that port. After the vehicle redistribution, step S25 is reached in which the number of surplus or lacking vehicles at each of the ports is updated using their latest vehicle counts.

In step S26, the parameter P is checked to see if all ports have been processed. If the result of the check in step S26 is affirmative, step S27 is reached. In step S27, a check is made to see if there still exist ports short of vehicles. If no port is found to be short of vehicles in step S27, the processing is terminated. If any port is found to lack vehicles, step S28 is reached. In step S28, a check is made to see if a predetermined maximum waiting time is exceeded in which no vehicles are to be redistributed within the current SD time. If the waiting time is not exceeded, step S29 is reached. In step S29, the lacking vehicles are carried over as demands into the next SD time. That is, these vehicles persist as existing demands in the next process of computing the surplus or shortage of vehicles.

If the maximum waiting time is exceeded, a search is made for surplus vehicles at more distant ports. Specifically, a longer distance is established in step S30 to expand the range of ports subject to the search.

With the applicable distance thus extended, a remote port may be found to possess surplus vehicles, but an attempt to redistribute vehicles from that port may be judged to exceed the maximum waiting time. Given that possibility, in step S31, a check is made to see if the maximum waiting time is exceeded in an attempt to resolve the shortage of vehicles through vehicle redistribution from any port within the newly established distance. If the maximum waiting time is found to be exceeded in step S31, the attempt to redistribute vehicles from faraway ports is abandoned and step S29 is reached. In step S29, arrangements are made so that the shortage of vehicles will be replenished in the next SD time.

If the maximum waiting time is not found to be exceeded in step S31, step S20 is reached again. In step S23 following step S30, a check is made to see if any port within the newly extended distance from the port P lacks vehicles.

If, with the above steps S41 through S43 executed, the sum of the existing vehicle count and the predicted arriving vehicle count is judged to exceed the accommodating capacity of the own port, then vehicles are redistributed to a vehicle-lacking port that may not be located in the vicinity, whereby congestion at the own port is averted. If no port is found to lack vehicles, vehicles are redistributed to the port currently having the fewest vehicles so as to avoid congestion at the own port. If a plurality of ports are found to have a small number of vehicles each, vehicles may alternatively be redistributed to the nearest of these ports.

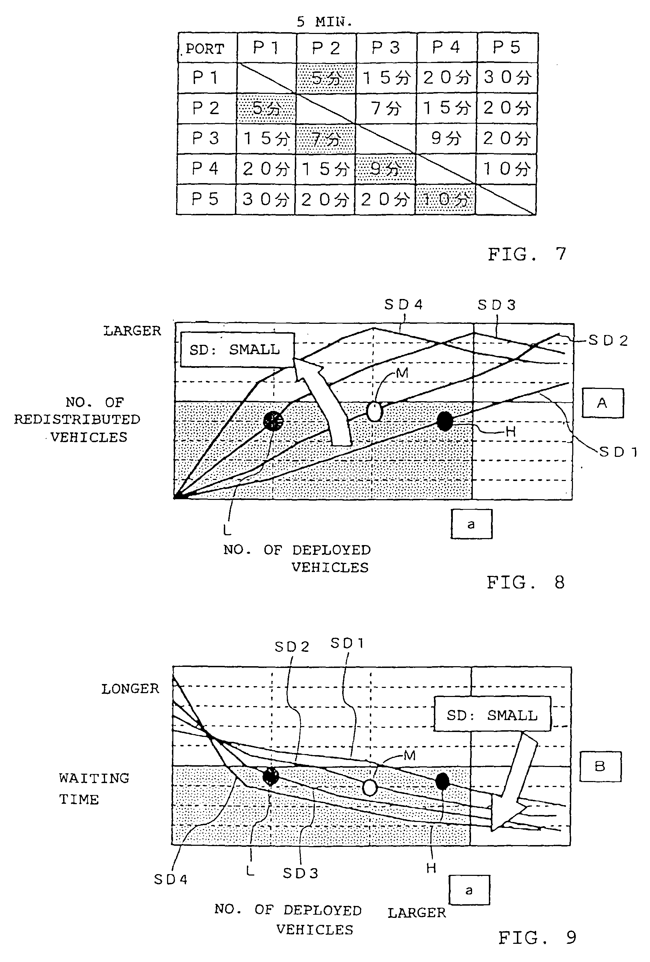

Below is a description of an algorithm for setting the SD time. Fig. 7 is a schematic diagram showing typical time periods required to redistribute vehicles among the ports involved. As shown in Fig. 7, it takes a maximum of 30 minutes to redistribute a vehicle from one port to the farthest port, and a minimum of 5 minutes from one port to the nearest port. As evident from Fig. 7, a number of vehicles determined to be redistributed in an SD time of less than five minutes will not reach their destination ports within that SD time. In an SD time of at least five minutes and less than seven minutes, vehicles may be redistributed only between the ports P1 and P2. In an SD time of at least seven minutes and less than nine minute, vehicles may be redistributed only between the ports P1 and P2 and between the ports P2 and P3. Examining the SD time frame in this manner reveals that vehicles may be redistributed among all ports in an SD time of at least 30 minutes. As described, to redistribute vehicles requires establishing an SD time equivalent to at least a minimum period of time needed to move vehicles between ports P. In the example of Fig. 7, the SD time is at least five minutes.

The SD time should be shorter than the maximum waiting time. Given a maximum waiting time of 15 minutes, the SD time should be set for less than 15 minutes. In that case, vehicles may be redistributed between the ports P1 and P2; between the ports P2 and P3; between the ports P3 and P4; and between the ports P4 and P5. If vehicles are allowed to travel automatically for redistribution, the time it takes to travel between ports is obviously determined by the velocity of such automated movement.

Described below is an algorithm for determining the SD time in connection with the number of vehicles deployed. Where as many vehicles as the total number of demands are allocated to a given port P, there is obviously no need to redistribute any vehicles to that port P. The smaller the number of vehicles allocated to a port, the greater the number of vehicles to be redistributed to that port. It follows that if a large number of vehicles are deployed to meet only a limited need for redistributing vehicles, the SD time tends to be shorter and the waiting time at each port P is more likely to be reduced.

Since deployment of an unlimited number of vehicles is not economical, it is desirable to reduce the vehicle count by prolonging the SD time and by making good use of the vehicle redistribution process. An inordinately long SD time coupled with a small number of deployed vehicles can prolong waiting time. Although longer SD time periods can stretch waiting time, an increasing number of arriving trips are expected from other ports so that the number of redistributed vehicles becomes relatively small. In any case, an optimum SD time should be determined through an overall trade-off between the number of deployed vehicles, the number of redistributed vehicles, and the waiting time.

Fig. 8 is a graphic representation illustrating relations between the number of deployed vehicles and the number of redistributed vehicles using the SD time as a parameter, and Fig. 9 is a graphic representation depicting relations between the number of deployed vehicles and the average waiting time also using the SD time as a parameter. In Fig. 8, on the assumption that the number of deployed vehicles is at most "a" and that the number of redistributed vehicles is at most "A," reducing the deployed vehicle count lowers the redistributed vehicle count in the same SD time (assuming SD1 > SD2 > SD3 > SD4). On the other hand, reducing the deployed vehicle count prolongs the average waiting time, as shown in Fig. 9. That is, the number of redistributed vehicles declines when the number of deployed vehicles is reduced, which results in a prolonged waiting time.

It follows that to keep the average waiting time from exceeding its upper limit B requires increasing the number of redistributed vehicles. This in turn necessitates shortening the SD time. In other words, to reduce the redistributed vehicle count requires prolonging the SD time; to minimize the average waiting time requires shortening the SD time.

If points L, M and N are established illustratively as shown in Figs. 8 and 9, both the upper limit B of the average waiting time and the maximum redistributed vehicle count A are satisfied at each of the points. Thus any one of the three factors, i.e., deployed vehicle count, redistributed vehicle count and average waiting time, may be selected to receive priority in accordance with what is specifically needed at a given point in time (e.g., by business-related decision).

What follows is a description of how an optimum number of vehicles can be deployed at the ports according to the invention. If it is desired to reduce the waiting time to zero despite differences between demands that actually occur at each port on the one hand and the demands deduced from predicted starting trips based on statistical ride demand data on the other hand, each port need only have one vehicle in theory every time a single demand has occurred. Meanwhile, if a demand has occurred at a given port and if there are enough vehicles deployed so that a vehicle may be redistributed from the port of the demanded destination to the port having generated that demand, then the two ports are always furnished with available vehicles upon elapse of the time required for the vehicle movement between the two ports. That is, the number of vehicles deployed at all ports is again brought to the initial status.

Suppose that the vehicle travel time is constant between all ports, that a demand has occurred at a given port, and that a vehicle is redistributed from any one of the other ports to the port having generated the demand. In such a case, if vehicles are redistributed between ports to replenish their vehicle counts as described above, then all ports acquire vehicles upon elapse of the vehicle travel time. If only one demand occurs in each vehicle travel time between ports, then deploying one vehicle at each port will reduce the waiting time theoretically to zero.

It follows that, in practice, the number of all deployed vehicles may be determined by finding out the number of predicted starting trips occurring in each vehicle travel time within the entire area, on the basis of the number of all predicted starting trips per day.

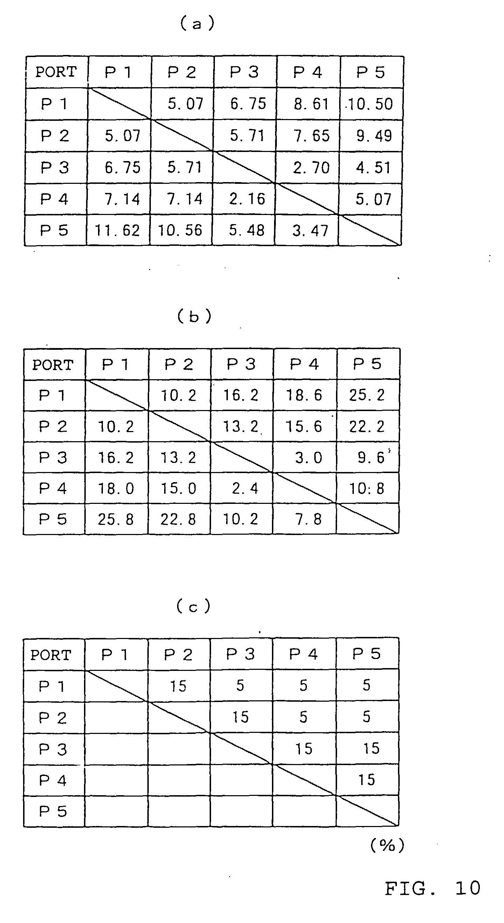

An example in which specific numbers are simulated is described below. Figs. 10A through 10C are schematic diagrams showing travel times among the ports P1 through P5, whereby area sizes are determined. Fig. 10A lists typical travel times in effect when users drive vehicles (at 48 km/h), and Fig. 10B gives typical travel times in effect when vehicles travel unattended (at 16 km/h).

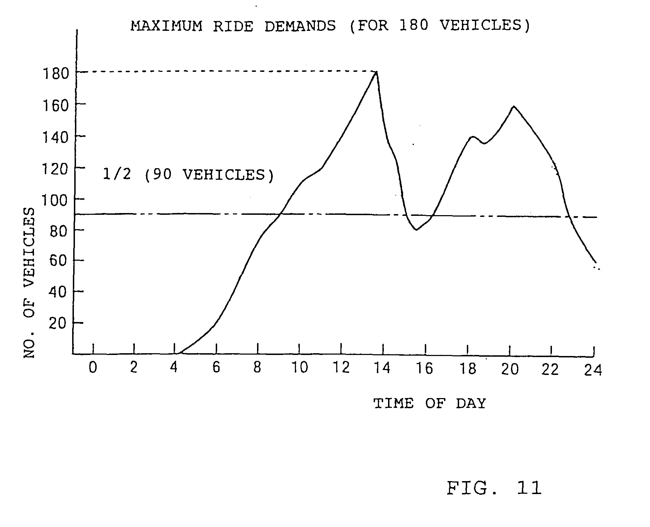

Fig. 11 is a graphic representation depicting actual ride demands on a given day. As illustrated, the ride demands are far from stable, showing considerable fluctuations throughout the day. In this example, the number of predicted starting trips for the day is about 1,800.

An optimum number of vehicles to be deployed is now calculated under the above conditions of simulation. The travel time for automated vehicle runs is regarded as a reference travel time between ports. This is because the travel time for redistributing vehicles is necessarily longer due to unattended vehicle runs than when vehicles are driven by users. A simple average of the vehicle travel times listed in Fig. 10B is 14.46 minutes (about 15 min.). If the number of all predicted starting trips per day is 1,800, then approximately 18 starting trips occur every 15 minutes. This means that about 18 trips take place while both manned and unattended vehicles come and go between ports to replenish their vehicle counts. Thus each port need only be provided with as many vehicles as the number of predicted starting trips per average vehicle travel time between ports. More specifically, the five ports are to have 18 vehicles each, i.e, a total of 90 (in other words, 5% of 1,800, the number of all predicted starting trips per day) vehicles deployed in the area. Under this scheme, each starting trip is responded to with a vehicle redistributed from one of the ports. In theory, each port always has one available vehicle when a demand occurs.

In practice, there are a number of variables to take into account. The travel time varies between ports; the total number of starting trips occurring per day varies; demands can concentrate in certain time zones. These variables combine to prevent the waiting time from being always zero. Still, when the system is capable of redistributing vehicles by predicting starting and arriving trips based on statistical data as described above, fluctuations in the waiting time can be minimized despite deviations of actual demands from predicted values.

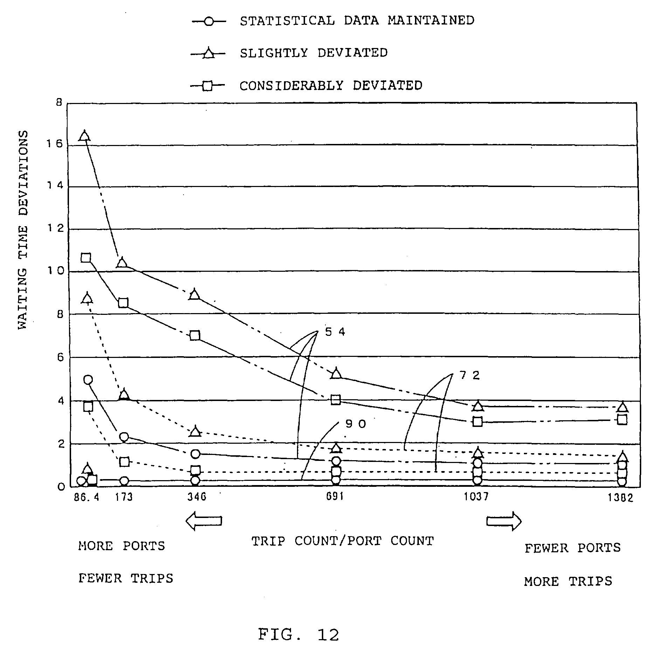

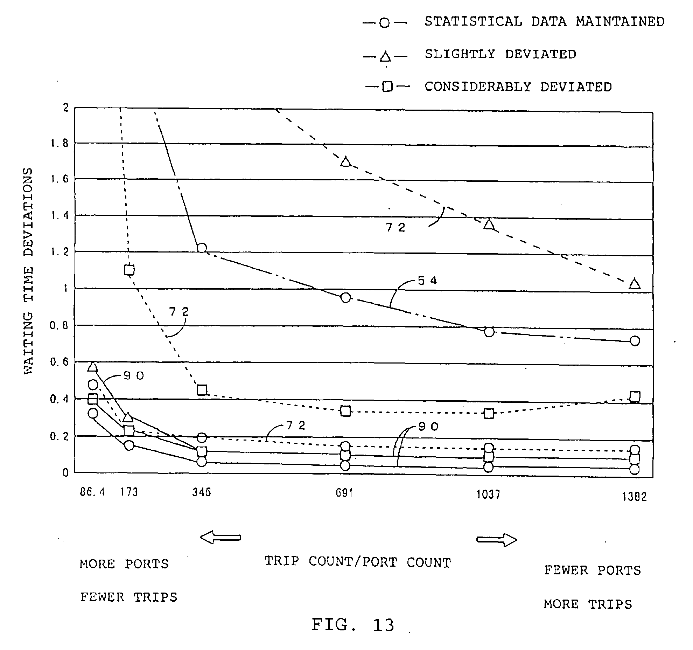

Figs. 12 and 13 are graphic representations illustrating deviations of waiting times per deployed vehicle count in the area, including deviations of actual demands (starting trips) from predicted starting trips deduced from statistical ride demand data. In Figs. 12 and 13, the axis of abscissa represents the number of trips divided by the number of ports. Fig. 13 is an enlarged view of the waiting time deviations in Fig. 12.

As shown in Figs. 12 and 13, where 90 vehicles are deployed, the deviations of waiting times are small and stable regardless of the magnitude of differences between the statistical data and the actual demands. Where the deployed vehicle count is between 72 and 54, the deviations of waiting times are quite pronounced and fluctuate considerably if the actual demands deviate from the statistical data. If the ratio of the number of trips to the number of ports becomes small, i.e., if the number of trips is very small compared with the number of ports, the waiting time deviations are enormous. If the number of trips is 1,800 compared with the port count being 10 or less, the deviations of waiting times in connection with the trip count or port count are small. In other words, the waiting time is not much affected by the number of trips or ports.

As described, the number of deployed vehicles may be determined on the basis of the number of predicted starting trips per average travel time between ports. This scheme implements a system that distributes vehicles in a stable manner against fluctuations of actual demands.

As will be understood from Fig. 11, demands do not occur consistently throughout the day (i.e., 24 hours). There exists a certain time zone (of 4 hours in the example) where no demand is generated. Thus the total predicted starting trips consisting of 1,800 trips covering all ride demands for the day may be assumed to be the trip count for 20 hours. On this assumption may be computed the number of predicted starting trips per average travel time between ports.

In the case above, it is preferable to consider the possibility that trips will occur not uniformly but in an irregular fashion between ports. For example, the number of vehicles moving between the ports P1 and P2 can be larger than the number of vehicles traveling between the ports P1 and P5.

One such example is shown in Fig. 10C. Fig. 10C lists frequencies of trips between specific ports in percentages reflecting different travel times therebetween. In this case, it is preferable to obtain not a simple average but a weighted average of the travel times between the ports. From Figs. 10B and 10C, the average travel time is computed to be 11.91 minutes (about 12 min.). That is, a total of 1,800 trips over 20 hours translate into 18 trips approximately every 12 minutes. Thus the five ports are to be furnished with a total of 90 vehicles.

Such different frequencies of trips between specific ports are unique to a given area. Wherever an area is set aside for the vehicle distribution system, the varying frequencies of trips may be inferred from specific features of the area or may be determined by collecting relevant data about the area.

It is thus preferable to consider different frequencies of trips between ports as well as irregular distribution of demands throughout the day in determining a vehicle travel time between ports as well as the number of predicted starting trips within the travel time. The vehicle travel time between ports may be dealt with not as a simple average but as a weighted average of varying travel times between ports, the averaging being weighted by taking different frequencies of port-to-port trips taken into account. In such a case, the duration of the day need not be limited to 24 hours.

Although the above-described embodiment has been shown envisaging a system in which the vehicles 4 are run automatically for redistribution, this is not limitative of the invention. Alternatively, vehicles 4 may be redistributed by human drivers or may be towed by tractor or some other appropriate vehicle for the purpose. The invention applies not only to the system of distributing vehicles that are driven by users but also to a distribution system for taxis and limousines.

The invention provides a vehicle distribution system for minimizing variations of waiting times when actual ride demands deviate from statistical data.

Given statistical data representing all trips at all ports, the system determines the number of all vehicles to be deployed within an area of the ports using the formula: deployed vehicle count = port count x number of predicted trips per average travel time between ports ; in order to minimize varying vehicle waiting times.

**Claims**

1. A vehicle redistribution system for predicting ride demands based on ride demands generated at a plurality of ports (P1-P5) in an area as well as on statistical ride demand data regarding all of said ports in order to redistribute vehicles (4) from a port having surplus vehicles (4) to a port lacking vehicles (4);

   wherein, after total predicted ride demand data per day are acquired from said statistical ride demand data, the number of all vehicles (4) to be deployed within said area is computed using a formula of

   deployed vehicle count = number of all ports in said area
   x number of  predicted ride demands per average travel time between ports;

   wherein said number of predicted ride demands per average travel time between ports (P1-P5) is converted from said total predicted ride demand data per day.

2. A vehicle distribution system according to claim 1, wherein said average travel time between ports is an average of vehicle travel times between ports during redistribution of vehicles (4).

3. A vehicle distribution system according to claim 1 or 2, wherein said average travel time between ports (P1-P5) is acquired by computing an weighted average of vehicle travel times between ports, the weighted average computation being carried out in accordance with frequencies of port-to-port trips based on said statistical ride demand data.

FIG. 1

20) DEMAND REPORTING UNIT

21) ARRIVING TRIP REPORTING UNIT

22) CONTRACTOR ID REPORTING UNIT

23) EXISTING VEHICLE COUNT REPORTING UNIT

24) DISPLAY UNIT

25, 107) COMMUNICATION INTERFACE

104) SURPLUS/SHORTAGE COMPUTING UNIT

103) PREDICTED RIDE DEMAND DETECTING UNIT

102) SD TIME DETERMINING UNIT

101) DEMAND COUNT DETERMINING UNIT

106) VEHICLE DISTRIBUTION DETERMINING UNIT

105) VEHICLE REDISTRIBUTION DETERMINING UNIT

111) CONTRACTOR INFORMATION STORING UNIT

110) PREDICTED STARTING TRIP STORING UNIT

12) COMMUNICATION DEVICE

4) VEHICLE

FIG. 2

EP 0 971 301 A2

| PORT NAME | P 1 | P 2 | P 3 | P 4 | P 5 |
|---|---|---|---|---|---|
| EXISTING DEMAND COUNT | 3 | 0 | 5 | 1 | 0 |
| EXISTING VEHICLE COUNT | 0 | 5 | 2 | 1 | 1 |
| SURPLUS/SHORTAGE | − 3 | + 5 | − 3 | 0 | + 1 |
| SD TIME | | | | | |
| TOTAL DEMAND COUNT | 4 | 2 | 5 | 2 | 1 |
| TOTAL VEHICLE COUNT | 2 | 5 | 4 | 2 | 3 |
| TOTAL SURPLUS/SHORTAGE | − 2 | + 3 | − 1 | ± 0 | + 2 |
| REDISTRIBUTED VEHICLE COUNT | + 2 | − 3 | + 1 | 0 | − 2 |
| REMAINING VEHICLE COUNT | | 2 | | | 1 |
| DEMANDS GENERATED NEXT | | | | | |
| VEHICLE REDISTRIBUTION | | | | | |

VEHICLE COUNT AND TRIP STATUS IN SD TIME AFTER REDISTRIBUTION

Td3 Td31 Td4 Tf5 Ta1 Tf2 Ta3 Ta4 Ta5 Tf1 Ta31 Tf4 Tall Tf21 Ta51

PRESENT
UNFEASIBLE
FEASIBLE

FIG. 3

FIG. 4

COMPUTING SURPLUS/SHORTAGE OF VEHICLES

P = 0 — S 1

P = P + 1 — S 2

— S 3

— S 4

— S 5

— S 6

S 7

$NTA + NPV + NTA' = NP$ — S 8

$VNP = NP - (DP + DT)$ — S 9

S 10

S 12

$PF = 0$

S 11 — $PF = 1$

$P = 5$ ? — S 13

END

FIG. 5

S3) CARRIED-OVER ARRIVING TRIP COUNT = NTA

S4) EXISTING VEHICLE COUNT = NPV

S5) EXISTING DEMAND COUNT = DP

S6) PREDICTED STARTING TRIP COUNT = DT

S7) ARRIVING TRIPS FROM OTHER PORTS?

S10) SUFFICIENT VEHICLES PRESENT AFTER REDISTRIBUTION?

EP 0 971 301 A2

PROCESS OF VEHICLE
REDISTRIBUTION

S23) ANY PORT WITHIN FIXED DISTANCE SHORT OF VEHICLES?

S24) REDISTRIBUTE VEHICLES

S25) MODIFY NO. OF SURPLUS/LACKING VEHICLES AT EACH PORT

S27) ANY PORT SHORT OF VEHICLES?

S28) MAXIMUM WAITING TIME EXCEEDED?

S30) EXTEND DISTANCE

S31) MAXIMUM WAITING TIME EXCEEDED?

S41) ACCOMMODATED VEHICLE COUNT $\leq$ NP?

S42) ANY PORT SHORT OF VEHICLES?

S43) DETECT PORT WITH THE SMALLEST EXISTING VEHICLE COUNT NPV

S29) CARRY OVER LACKING VEHICLES AS DEMANDS INTO NEXT SEARCH RANGE

FIG. 6

5 MIN.

| PORT | P1 | P2 | P3 | P4 | P5 |
|------|------|------|------|------|------|
| P1 | | 5分 | 15分 | 20分 | 30分 |
| P2 | 5分 | | 7分 | 15分 | 20分 |
| P3 | 15分 | 7分 | | 9分 | 20分 |
| P4 | 20分 | 15分 | 9分 | | 10分 |
| P5 | 30分 | 20分 | 20分 | 10分 | |

FIG. 7

LARGER

SD: SMALL

NO. OF
REDISTRIBUTED
VEHICLES

SD4   SD3   SD2

M

A

H

SD1

L

a

NO. OF DEPLOYED
VEHICLES

FIG. 8

LONGER

SD2   SD1

SD: SMALL

WAITING
TIME

M

B

SD4   L   SD3   H

a

NO. OF DEPLOYED
VEHICLES     LARGER

FIG. 9

( a )

| PORT | P 1 | P 2 | P 3 | P 4 | P 5 |
|------|------|------|------|------|------|
| P 1 |  | 5. 07 | 6. 75 | 8. 61 | .10. 50 |
| P 2 | 5. 07 |  | 5. 71 | 7. 65 | 9. 49 |
| P 3 | 6. 75 | 5. 71 |  | 2. 70 | 4. 51 |
| P 4 | 7. 14 | 7. 14 | 2. 16 |  | 5. 07 |
| P 5 | 11. 62 | 10. 56 | 5. 48 | 3. 47 |  |

( b )

| PORT | P 1 | P 2 | P 3 | P 4 | P 5 |
|------|------|------|------|------|------|
| P 1 |  | 10. 2 | 16. 2 | 18. 6 | 25. 2 |
| P 2 | 10. 2 |  | 13. 2 | 15. 6 | 22. 2 |
| P 3 | 16. 2 | 13. 2 |  | 3. 0 | 9. 6 |
| P 4 | 18. 0 | 15. 0 | 2. 4 |  | 10: 8 |
| P 5 | 25. 8 | 22. 8 | 10. 2 | 7. 8 |  |

( c )

| PORT | P 1 | P 2 | P 3 | P 4 | P 5 |
|------|------|------|------|------|------|
| P 1 |  | 15 | 5 | 5 | 5 |
| P 2 |  |  | 15 | 5 | 5 |
| P 3 |  |  |  | 15 | 15 |
| P 4 |  |  |  |  | 15 |
| P 5 |  |  |  |  |  |

(%)

FIG. 10

MAXIMUM RIDE DEMANDS (FOR 180 VEHICLES)

FIG. 11

FIG. 12

FIG. 13